# EUROPEAN PATENT SPECIFICATION

(11) **EP 0 474 484 B1**
(45) Date of publication and mention of the grant of the patent: **12.06.1996**
(21) Application number: 91308114.7
(22) Date of filing: 04.09.1991
(51) Int. Cl.: F01D 5/30, F01D 5/00, B23P 6/00

(54) **Vane lug repair technique**
Reparaturtechnik für Schaufelfüsse
Technique de réparation pour pieds d'aube

(30) Priority: 04.09.1990 US 577231
(43) Date of publication of application: 11.03.1992
(73) Proprietor: UNITED TECHNOLOGIES CORPORATION, Hartford, CT 06101 (US)
(72) Inventor: Baumgarten, Robert W., Palm Beach Gardens, Florida 33410 (US); Robertson, John M., Tequesta, Florida 33469 (US); Bogard, Ralph B., North Palm Beach, Florida 33408 (US); Dunn, Brian T., Jupiter, Florida 33458 (US)
(74) Representative: Tomlinson, Kerry John

(56) References cited:
- EP-A- 0 470 868
- FR-A- 2 449 508
- GB-A- 2 060 436
- GB-A- 2 071 777
- US-A- 3 810 286
- US-A- 5 060 842

## Description

This invention relates to the repair of retaining lugs on turbine engine vanes, with specific application to jet engines.

A gas turbine engine includes a compressor section, a combustion section, and a turbine section. Disposed within the turbine section are alternating rows of rotatable blades and static vanes. The stationary vanes, disposed between rows of rotating blades, stabilize and direct the gas flow from one row of rotating blades to the next row. Such gas flow stabilization optimizes the flow through the turbine section, thereby maximizing the amount of work extracted.

As hot combustion gases pass through the turbine section, the blades are rotatably driven, turning a shaft which drives the compressor and other auxiliary systems. The higher the gas temperature, the more energy which can be extracted in the turbine section, and the greater the overall efficiency. In order to increase the turbine section operating temperature capability, nickel-base superalloy materials are commonly used to produce the turbine airfoil blades and vanes, since such materials retain mechanical properties at elevated temperatures.

The stator, or stationary vane, assembly normally mounts in the engine case. While rows of rotor blades extend outwardly from the rotor across the gas flow path, in both the turbine and compressor sections, an array of stator vanes extends inwardly from the engine case across the gas flow path at the downstream end of most blade rows. Such vanes are frequently held in place at the engine case by feet, or lugs, which are engaged by flanges or retaining rings extending inwardly from the outer case. Frequently such lugs are damaged, mis-machined during manufacture, or broken during installation or use. Vanes must operate close to their temperature limits, and if they should be subjected to even brief exposure to higher temperatures, the strength and fatigue capability of the material used may be decreased. Turbine vanes may also undergo distortion, stretching, and elongation during service. This condition, otherwise known as metal creep, may reduce service life, and in combination with reduced strength and fatigue capability, result in vane retaining lug failure. The present invention is directed to a method for the repair of such lugs, or for the reconfiguration thereof in the event of a design modification.

In the past, such repair or modification has been difficult due to the nature of the material involved. The vane assembly is frequently made from a cast material, and welding is not a suitable repair technique due to microcracking or strain age cracking. Attempts to build up the broken area by such techniques as plasma spraying additional material onto the broken base of the lug do not typically meet structural creep and fatigue property requirements at elevated temperatures.

Since many cast, hardenable nickel-base materials are not suitable for welding, means were sought to achieve a solid state bond of a replacement blank to the vane assembly. It was found that cast replacement lugs could not effectively be forge joined to a cast vane assembly, due to high joining load requirements and the inability to achieve adequate deformation to avoid continuous interfacial carbide precipitation at the bond interface. Wrought materials, on the other hand, are generally more suitable for forge joining, and a number of techniques are known for the bonding of wrought alloys. An exemplary development is the Gatorizing® isothermal forging method useful with high temperature alloys, as described in commonly owned U. S. Patent 3,519,503.

In addition, commonly owned U. S. Patent 4,873,751 teaches a fabrication or repair technique for integral bladed rotors. However, prior to the present invention, no technique was available for the successful repair of the retaining lugs or feet of stator vane assemblies.

In both the compressor and turbine sections of modern jet engines, components are operated at or near the outer limits of their capabilities with respect to both temperature and stress. Accordingly, any repair technique with respect to such components must provide repairs which have the strength and temperature capabilities of said components. Other requirements of the components, such as fatigue resistance, resistance to rupture, and life span must also be met.

The need for repair may arise both in service and in the initial fabrication of the engine. Further, subsequent design change or modification may make it desirable to modify or replace a given component to achieve greater efficiencies, greater reliability, or longer life.

In a broad aspect, the present invention provides a method for replacing a vane assembly retaining lug or the like wherein said vane assembly comprises a cast nickel-base or cobalt-base superalloy or a titanium alloy, including the steps of:
a) removing the original retaining lug in such a fashion so as to leave a bonding surface;
b) providing a replacement wrought alloy lug with a bonding surface;
c) placing said bonding surfaces adjacent one another;
d) locally heating said bonding surfaces under vacuum and applying pressure to the interface of said bonding surfaces so as to forge join said replacement lug to said vane assembly to form an integral assembly;
e) heat treating said integral assembly; and
f) machining said integral assembly to a desired configuration.

In a preferred embodiment the present invention relates to a method for the repair or replacement of retaining lugs or feet on gas turbine engine vanes, where such vanes are comprised of nickel-base or cobalt-base superalloys or titanium alloys. A wrought material replacement lug blank, preferably but not necessarily of a chemical composition similar to the vane material, is forge joined in place by locally heating the interface surfaces of the replacement lug blank and the vane platform to a temperature within the solution temperature range of both alloys, applying a load sufficient to produce deformation in the wrought material at the interfacial surface, thereby forming a solid state bond between the replacement lug blank and the vane. After joining, the bonded assembly is isothermally vacuum solution heat treated and aged at temperatures compatible with the solution and aging temperatures of the two alloys. Thermal distortion of the vane is not a problem due to the inherently high thermal stability of the cast material of the vane. While the bonded replacement lug may distort, the lug is sized so as to be sufficiently oversized to accept such distortion. After heat treatment, the bonded lug may be machined to the final configuration.

Thus a vane assembly having a mis-machined lug may be repaired by replacement of the lug with a new piece of material, from which the new lug may be machined properly. Thus, in its preferred embodiments at least the present invention permits the replacement of improperly machined lugs with correctly machined lugs. It also permits the replacement of a damaged or broken lug with a lug of similar configuration or, if desired, with a lug of differing dimension or configuration, and the replacement of vane lugs in the event of a design modification or improvement. Although this invention is described in terms of repairing the feet or lugs of vanes of gas turbine engines, the technique is also applicable to repair of attachment means of other superalloy components of like nature.

Some preferred embodiments of the invention will now be described, by way of example only, with reference to the drawings in which:

Figure 1 illustrates a dual airfoil vane of the type for which the present invention is suitable.

Figure 2 illustrates a vane assembly demonstrating a broken retaining lug.

Figure 3 illustrates a vane assembly from which a broken or damaged lug has been removed, as by machining.

Figure 4 illustrates a vane assembly to which a replacement lug has been bonded, prior to machining to final configuration.

Figure 5 illustrates a vane assembly having a new retaining lug, of different size, bonded thereto.

Figures 6 and 7 are photomicrographs of a repaired vane microstructure at magnifications of 50X and 500X, with Kallings' etchant.

Figure 8 is a composite photomicrograph illustrating breakage of a bonded vane and lug replacement under stress.

The present invention provides a method for the repair of broken, damaged or improperly machined attachment lugs on vanes for gas turbine engines, where such lugs are made of high strength, high temperature materials such as nickel-base or cobalt-base superalloys, or titanium alloys, and also provides a method for the replacement of such lugs when appropriate. Cast materials afford economic, performance and producibility advances over use of wrought materials for turbine vane applications. Consequently, most turbine vanes are cast, commonly using the lost wax technique. As is well known, structural welds in many hardenable cast superalloys are not feasible, due to microcrack formation. Surprisingly, we have discovered that a wrought replacement lug may be joined to the cast vane assembly, by a forge joining technique. By use of a wrought replacement piece in a re-designed configuration, superior high temperature properties may be attained in the repaired component, resulting in a vane assembly having a stronger retaining lug than the original.

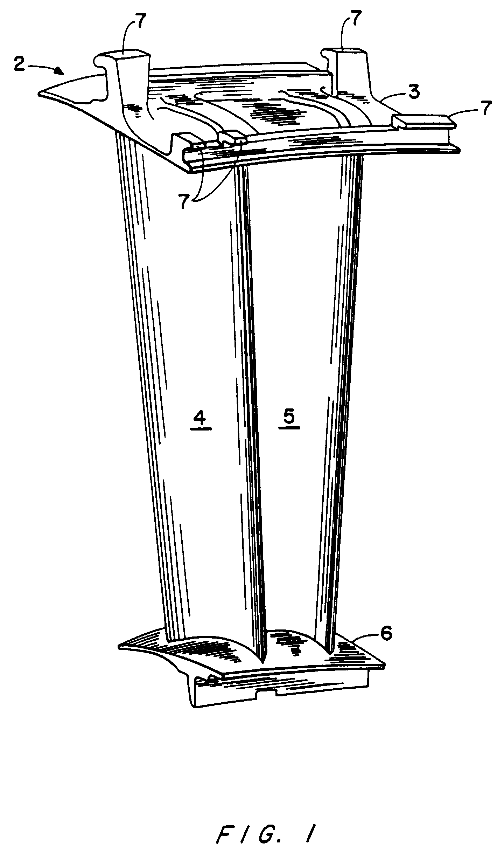

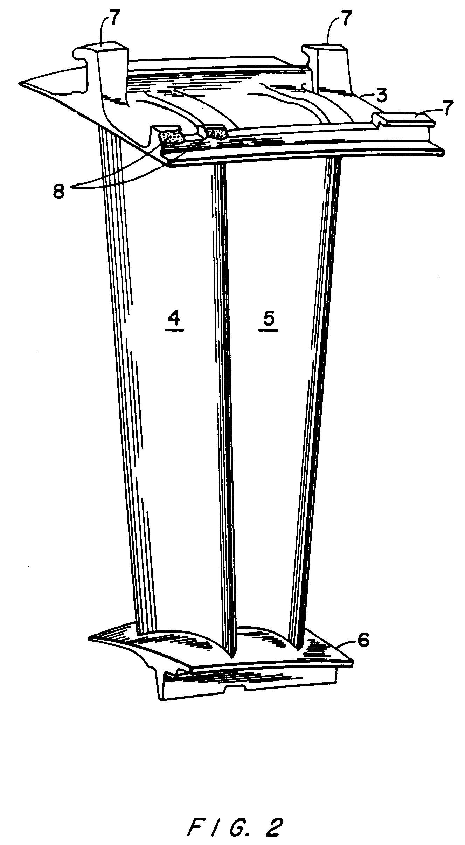

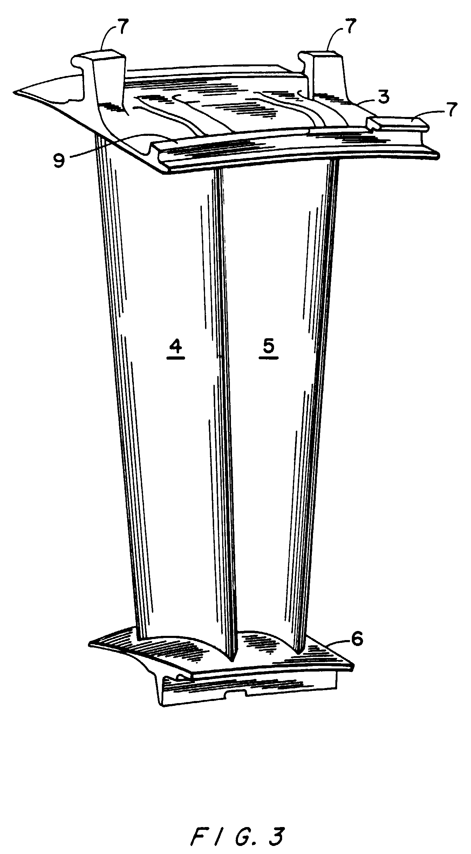

A cast vane assembly, 2, such as shown in Figure 1, comprises a vane outside diameter platform, 3, vanes 4 and 5, and an annulus inside diameter platform, 6. The outer diameter platform has projecting lugs, 7, adapted to fit circumferential flanges or retaining rings on the engine case, not shown. Frequently, as a result of damage during installation or in use, lugs on such vane assembly, 2, are broken off as in Figure 2, which illustrates a vane assembly having stubs, 8, where retaining lugs were formerly located. These stubs, 8, or damaged areas of the vane assembly, may be machined away, as shown in Figure 3, to leave a vane assembly having a uniform repair site, 9, in the location of the failed lug.

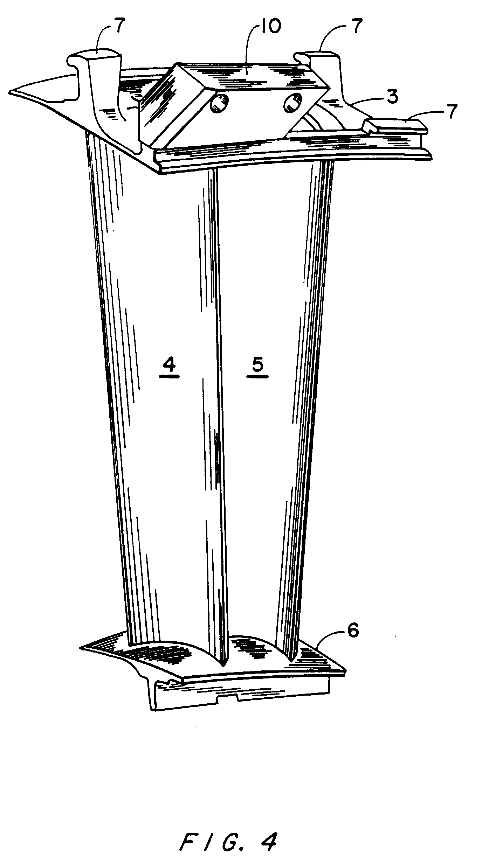

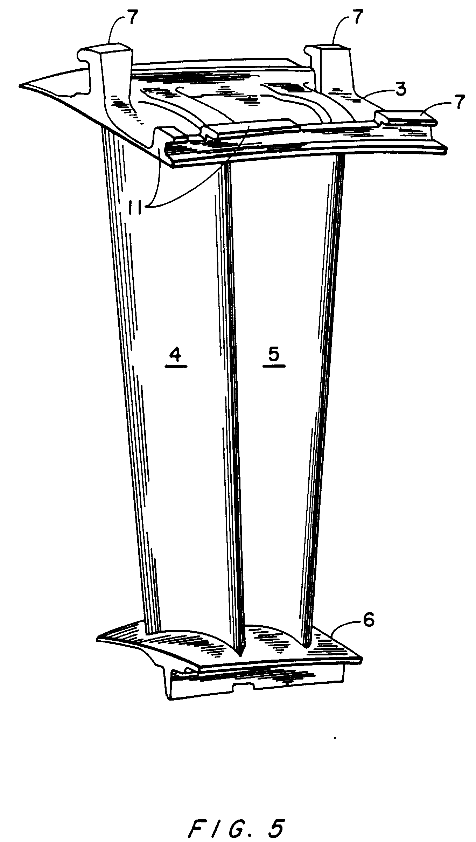

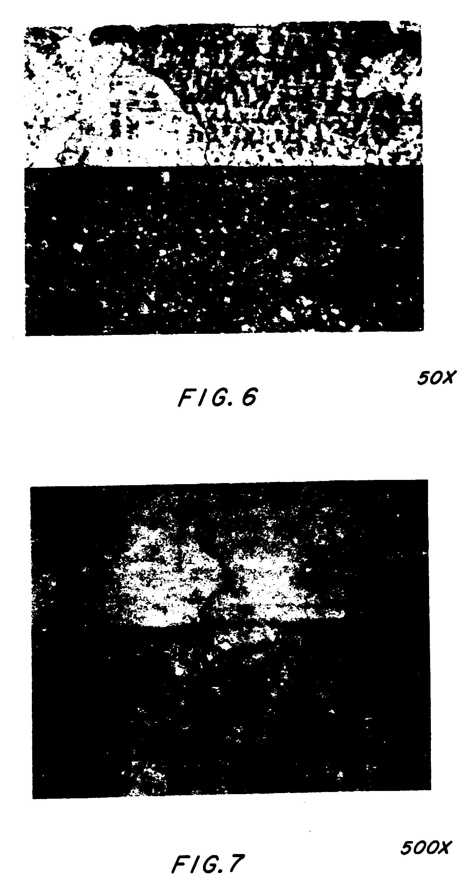

An oversized retaining lug blank, 10, having the requisite dimensions to replace the failed lug, is then positioned over the uniform repair site, in contact therewith. This replacement lug blank is of the same general composition as the cast vane assembly composition, but preferably of a wrought alloy corresponding thereto. The replacement blank is accurately clamped in position in relation to the repair site, and is forge joined thereto by heating the interface surfaces of the blank and the repair site to within the solution temperature range of both alloys, but not exceeding the solution heat treatment temperature of either alloy, and without causing local melting or significant grain growth in the vane assembly and the replacement lug blank. The forge joined vane and replacement lug assembly, as shown in Figure 4, is then subjected to an appropriate isothermal vacuum solution and age heat treatment step to achieve the desired mechanical properties, after which the replacement lug blank may be machined to the desired final configuration, as illustrated in Figure 5, which demonstrates that a lug of a differing geometry and configuration, 11, may be put in place of the failed retaining lug, if so desired. Figures 6 and 7 illustrate the solid state bonding of cast IN-100 with a wrought modified IN-100.

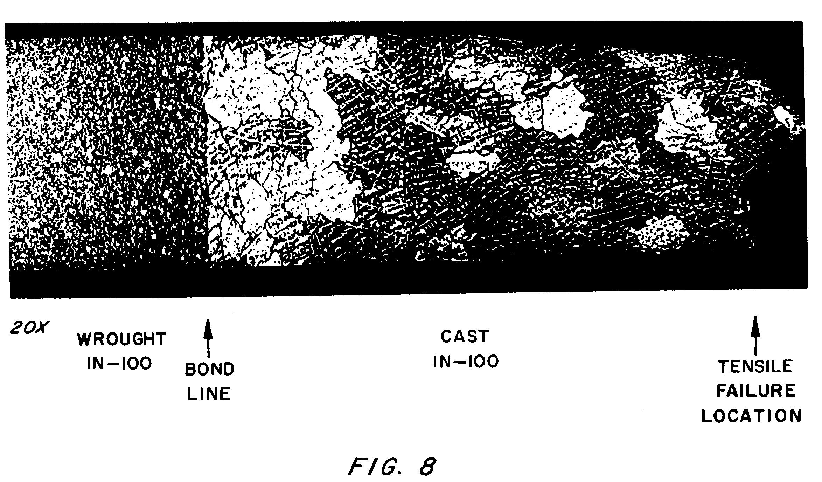

Figure 6 is at a magnification of 50X, while Figure 7 is at 500X. Both samples were treated with Kallings' etchant. Figure 8 is a composite photomicrograph, at 20X magnification, of a failed tensile specimen of bonded cast IN-100 and wrought Modified IN-100, after being stressed to the breaking point at 1425°F (774°C). It is to be noted that the locus of the break occurred not at the bond line, but at a point within the cast material. Tensile properties for this piece, at 1425°F (774°C), were Y.S. 122.3 ksi (843.1 N/mm²), U.T.S. 148.9 ksi (1026.5 N/mm²), and El. 13.3%, and RA 24.1.

As previously indicated, the present invention is specifically useful in the repair of damaged gas turbine engine vane assemblies, which assemblies are normally made of a cast high temperature material, such as either non-hardenable or precipitation-hardenable nickel-base superalloys, or titanium. Representative of the alloys are those nickel-base or cobalt-base alloys designated in the industry as IN-100, Inconel, Hastelloy, Mar-M, Udimet, Waspaloy, Haynes, Stellite, etc.

It has now been found that a wrought replacement lug blank of suitable high temperature alloy may be forge joined to the cast material of the vane assembly. The replacement lug blank is fashioned of a material which has been preconditioned to give it low strength and high ductility, as described in commonly owned U. S. Patent 3,519,503. This reference teaches that a preferred preconditioning method consists of extruding a compacted powder billet through a die to produce a reduction in cross-sectional area of at least 4:1, and preferably at least 6:1, at a temperature below but within about 450°F (250°C) of the normal recrystallization temperature of the material. Exemplary materials include the wrought formulations of those alloys cited above as suitable for cast vane preparation. The materials suitable for use as the replacement lug blank are easily deformed in the solution temperature range of the vane material to which they are to be joined. The preferred alloy is that having the closest chemistry to the material of the vane assembly. Thus, if the vane assembly comprises cast IN-100, the preferred replacement lug blank material is wrought IN-100. An example of a suitable pairing of cast vane material and wrought lug material is the combination of IN-100 (9.5% Cr, 15.0% Co, 0.17% C, 4.75% Ti, 5.5% Al, 3.0% Mo, 0.015% B, 1.0% V, 0.06% Zr, Bal Ni) with a modified IN-100 (12.4% Cr, 18.5% Co, 0.07% C, 4.3% Ti, 5.0% Al, 3.2% Mo, 0.02% B, 0.8% V, 0.06% Zr, Bal Ni). While similar chemistry is desirable, the limiting factors appear to be avoidance of local chemical segregation, control of interfacial carbide formation, and creep and fatigue strength of the wrought material. It is considered within the skill of one familiar with cast and wrought superalloys, and/or titanium, to determine the feasibility of forge joining any specific cast/wrought material pairing, and to determine a suitable wrought material replacement lug blank for any given cast vane composition.

Preparation for the lug repair includes machining away the broken area of the failed lug, or in the case of a replacement, removing the lug itself, to provide a uniform surface for attachment of the replacement lug blank. Any conventional metal removal technique is suitable, so long as a relatively smooth (20-30 microinches (5.08 x 10⁻⁴ m - 7.62 x 10⁻⁴ m) Ra) and uniform surface is achieved. The intended bonding surface of both the vane assembly and the replacement lug blank should then be treated to encourage bonding. This generally entails removal of all foreign materials, including dirt, grease, machining residue, etc., and surface oxidation. Such surface preparation may be accomplished by a variety of readily apparent techniques, such as mechanical surface grinding and cleaning, and selective chemical etching.

The replacement lug blank is sized to provide the desired lug size and configuration after machining, and is configured so as to provide a bonding surface having a close tolerance fit to the bonding surface of the vane assembly. After the replacement lug blank is positioned in close proximity to the bonding surface of the vane assembly, as in a tooling fixture or jig, a forge joining pressure is applied to the blank. While this pressure is applied, the interface between the blank and the vane assembly bonding surface is locally heated to a temperature within about 200°F (111°C) of, but not exceeding the solution heat temperature of the material of the replacement lug blank, without causing local melting thereof. The tooling for this operation should avoid any scratching or loading of the vane assembly airfoils, and must be supported only against the inside diameter of the outer platform. The lug replacement blank and the vane assembly must be maintained in true alignment during the heat-up and upset cycles, and the lug blank and vane assembly clamping systems should preferably be of copper alloy material to provide for proper water cooling and high electrical current carrying capability. The hydraulic pressure, for upset, and the electrical current, for heating, must be individually controlled to obtain a gradual, predetermined upset of the wrought material. The entire forge joining operation must be conducted in a high vacuum environment of below 4x 10⁻⁵ Torr (5.33 mPa), and preferably below 10⁻⁵ Torr (1.33 mPa).

Bonding is conducted under conditions of temperature and pressure sufficient to cause metal flow. These conditions will obviously vary depending upon the exact materials involved. However, for typical superalloys the temperatures will be on the order of from about 1900°F (1038°C) - 2100°F (1149°C), and the pressures will be on the order of about 20 to about 30 ksi (138 - 207 MPa). In the bonding of typical replacement lugs, it would be appropriate to have an upset or shortening of the replacement lug blank on the order of 0.025-0.075 inch (0.635 - 1.405 mm), and preferably from 0.025-0.030 inch (0.635 - 0.762 mm), during bonding to insure sufficient metal flow, and to minimize any cracking tendency of the replacement lug. Any upset material expelled from the bond area may be subsequently removed during machining to the final configuration.

### Example 1

A number of broken vane assemblies from the fourth stage of the turbine of a military jet turbine engine were prepared for repair. The vane material was IN-100 cast nickel-base superalloy, comprising 9.5% Cr, 15.0% Co, 0.17% C, 4.75% Ti, 5.5% Al, 3.0% Mo, 0.015% B, 1.0% V, 0.06% Zr, and the balance Ni. The vane retaining lug of the selected vane assemblies had broken off in service, leaving a stub as shown in Figure 2. This stub was machined away to a smooth repair site having a uniform interface surface, which was then thoroughly cleaned in conventional manner. Wrought replacement lug blanks, machined to mate with the interface surface of each vane assembly, and having a foot section somewhat larger than the lug which had broken away, were positioned in face to face assembly with the vane interface surface. The wrought replacement lug blanks were fashioned of a modified IN-100 alloy comprising 12.4% Cr, 18.5% Co, 0.07% C, 4.3% Ti, 5.0% Al, 3.2% Mo, 0.02% B, 0.8% V, 0.06% Zr, balance Ni. The vane assemblies and replacement lug blanks were placed in a forge joining apparatus, and subjected to a forging pressure of 30 ksi (207 MPa) under a vacuum of 4 x 10⁻⁵ Torr (5.33 mPa) while being resistance heated to a temperature of from 1910° (1043°C) to 1965°F (1074°C). An upset of 0.030 inches (0.762 mm) was achieved before release of the forging pressure. The bonded assemblies were then isothermally heat treated, still under vacuum, at 1975±25°F (1079 ± 14°C) for 8 hours, cooled at a rate equal to or faster than air cooling to room temperature, and then age heat treated at 1600±15°F (871±8°C) for an additional 12 hours. The pieces were then cooled to ambient at a rate equal to or faster than air cooling. The bonds formed between the vane assemblies and the replacement lugs were inspected and found to be uniform. The replacement lug blanks were then machined to lugs of a larger base dimension than those which they replaced, as illustrated in Figures 1 and 5. The repaired vane assemblies were subjected to a variety of tests and found to have properties comparable or superior to those of the average vane assembly used in the military jet engine from which they were taken. When the repaired vane was subjected to tensile testing, breakage occurred in the original cast IN-100 material, rather than in the bonding zone. Photomicrographs of repaired vane assemblies show (Figures 6 and 7) a very strong bond line, and (Figure 8) breakage under tension in the cast IN-100 vane. Figure 8 is a photomicrograph of a longitudinal section of a failed tensile test specimen, tested at 1425°F (774°C). Shown are wrought IN-100, to the left of the bond line, and cast IN-100, to the right of the bond line. The tensile test failure occurred outside the bond interface zone, in the weaker cast IN-100 material. When a vane assembly has been repaired, as in this example, and is utilized in a jet engine, the enlarged lug successfully results in greater strength, and higher resistance to the working stresses which caused the original retaining lug to fail, due to increased loading surface area.

### Example 2

Elevated temperature stress-rupture testing was performed on bonded samples prepared as in Example 1. Two individual bonded samples were exposed to 1550°F/22 ksi (843°C/151.7 N/mm²) and 1425°F/22 ksi (774°C/151.7 N/mm²), respectively. These temperatures and stresses are representative of the maximum typical military engine operating temperatures and stresses which the vane repair area would be exposed to in service, and are thus a measure of life. The sample test at 1550°F/22 ksi (843°C/151.7 N/mm²) went 93 hours before failure, and the sample tested at 1425°F/22 ksi (774°C/151.7 N/mm²) went 543 hours, before the test was discontinued without specimen failure. These test results indicated suitable life for engine service, with the 1425°F/22 ksi (774°C/151.7 N/mm²) temperature/stress condition being the maximum designed operating conditions. Thus, the bonded repair area is provided with the required stress-rupture capability to meet the high temperature and stress conditions encountered during typical and maximum stress and temperature in-service conditions.

It is to be understood that the above description of a preferred embodiment is subject to considerable modification, change, and adaptation by those skilled in the art, and that such modifications, changes, and adaptations are to be considered to be within the scope of the present invention, which is set forth by the appended claims.

## Claims

1. A method for replacing a vane assembly retaining lug or the like wherein said vane assembly comprises a cast nickel-base or cobalt-base superalloy or a titanium alloy, including the steps of:
a) removing the original retaining lug in such a fashion so as to leave a bonding surface;
b) providing a replacement wrought alloy lug with a bonding surface;
c) placing said bonding surfaces adjacent one another;
d) locally heating said bonding surfaces under vacuum and applying pressure to the interface of said bonding surfaces so as to forge join said replacement lug to said vane assembly to form an integral assembly;
e) heat treating said integral assembly; and
f) machining said integral assembly to a desired configuration.

2. A method as claimed in claim 1, wherein;
the original retaining lug is removed to leave a stub portion of said original lug;
said stub portion is machined to provide a face which constitutes a smooth surface to which a replacement lug may be bonded; and
the replacement lug blank is positioned adjacent to the face of said stub, said replacement lug blank being of a wrought alloy selected so as to be readily forge joined to said cast alloy of said vane.

3. A method as claimed in claim 1, wherein said vane assembly comprises a cast nickel-base or cobalt-base superalloy and the replacement retaining lug comprises a wrought superalloy, wherein said replacement retaining lug is solid state bonded directly to said vane assembly, wherein;
step a) comprises removing the original vane assembly retaining lug from said vane assembly in such a fashion as to form a repair site including a vane assembly bonding surface;
step b) comprises fabricating a replacement lug blank of said wrought superalloy in such a manner that said blank becomes deformable under conditions of elevated pressure and temperature, including forming a replacement lug blank bonding surface thereupon;
step c) comprises positioning said replacement lug blank bonding surface accurately in mating contact with said vane assembly bonding surface, and disposing said blank and said vane assembly within forging means;
step d) comprises evacuating said forging means while locally heating said replacement lug blank bonding surface and said vane assembly bonding surface, and simultaneously applying pressure to said replacement lug blank to obtain deformation thereof at the interface of said blank bonding surface and said vane assembly bonding surface and a solid state bonding at said interface to form an integral assembly;
step e) comprises vacuum heat treating said integral assembly; and
step f) comprises machining said integral assembly so as to obtain the desired vane assembly retaining lug configuration.

4. A method as set forth in any preceding claim, wherein said cast alloy is a nickel-base superalloy.

5. A method as set forth in claim 4, wherein said replacement lug blank comprises a wrought nickel-base superalloy.

6. A method as set forth in claim 5, wherein said cast nickel-base superalloy is IN-100 and said wrought nickel-base superalloy is a modified IN-100 alloy.

7. A method as set forth in any preceding claim, wherein said interface between said blank and said face is heated to a temperature of from about 1040°C (1900°F) to about 1150°C (2100°F), and said bonding force is from about 138 to about 207 MPa (20 to about 30 ksi).

8. A method as set forth in claim 3 and any of claims 4 to 7 when dependent on claim 3, wherein said solid state bonding at said interface meets elevated temperature tensile and stress-rupture mechanical property requirements of typical and maximum in-service stress and temperature conditions.

9. A method as set forth in any preceding claim wherein the interface surfaces of said blank and said face are heated to within the solution temperature range of both alloys but not exceeding the solution heat treatment temperature of either alloy, and without causing local melting or significant grain growth in the vane assembly and replacement lug blank.

## Patentansprüche

1. Verfahren zum Ersetzen einer Haltenase einer Leitschaufelanordnung oder etwas ähnlichem, wobei die Leitschaufelanordnung eine Guß-Superlegierung auf Nickelbasis oder Cobaltbasis oder eine Guß-Titanlegierung aufweist, aufweisend die folgenden Schritte:
a) Entfernen der originalen Haltenase derart, daß eine Verbindungsfläche zurückbleibt;
b) Bereitstellen einer Ersatznase aus einer Schmiede-Legierung mit einer Verbindungsfläche;
c) Plazieren der Verbindungsflächen einander angrenzend bbenachbart;
d) lokales Erwärmen der Verbindungsflächen im Vakuum und Aufbringen von Druck auf die Zwischenfläche der Verbindungsflächen, um so die Ersatznase mit der Leitschaufelanordnung durch Schmieden zu verbinden, um eine integrale Anordnung zu bilden;
e) Wärmebehandeln der integralen Anordnung; und
f) Bearbeiten der integralen Anordnung zu einer gewünschten Gestalt.

2. Verfahren nach Anspruch 1, wobei
die originale Haltenase so entfernt wird, daß ein Stummelbereich der originalen Nase bleibt;
wobei der Stummelbereich bearbeitet wird, um eine Fläche bereitzustellen, die eine glatte Fläche bildet, mit der eine Ersatznase verbunden werden kann; und
wobei der Ersatznasen benachbart der Fläche des Stummels (Ersatznasenrohling) positioniert wird und wobei der Ersatznasenrohling der Ersatznase aus einer so ausgewählten Schmiedelegierung besteht, daß sie leicht mit der Guß-Legierung der Leitschaufel durch Schmieden verbunden werden kann.

3. Verfahren nach Anspruch 1, bei dem die Leitschaufelanordnung eine Guß-Superlegierung auf Nickelbasis oder Cobaltbasis aufweist und die Ersatzhaltenase eine Schmiede-Superlegierung aufweist, wobei die Ersatzhaltenase direkt mit der Leitschaufelanordnung Festzustands-verbunden wird, wobei
Schritt a) das Entfernen der originalen Haltenase der Leitschaufelanordnung von der Leitschaufelanordnung derart aufweist, daß eine Reparaturstelle gebildet wird, die eine Verbindungsfläche der Leitschaufelanordnung enthält;
Schritt b) das Herstellen eines Ersatznasenrohlings aus der Schmiede-Superlegierung aufweist derart, daß der Rohling unter Zuständen erhöhten Drucks und erhöhter Temperatur verformbar wird, einschließlich dem Ausbilden einer Ersatznasenrohling-Verbindungsfläche daran;
Schritt c) das Positionieren der Ersatznasenrohling-Verbindungsfläche korrekt in Verbindungskontakt mit der Verbindungsfläche der Leitschaufelanordnung und das Anordnen des Rohlings und der Leitschaufelanordnung in einer Schmiedeeinrichtung aufweist;
Schritt d) das Evakuieren der Schmiedeeinrichtung während lokalem Erwärmen der Ersatznasenrohling-Verbindungsfläche und der Verbindungsfläche der Leitschaufelanordnung und das gleichzeitige Aufbringen von Druck auf den Ersatznasenrohling aufweist, um dessen Verformung an der Zwischenfläche der Rohling-Verbindungsfläche und der Verbindungsfläche der Leitschaufelanordnung und ein Festzustandsverbinden an der Zwischenfläche zu erhalten, um eine integrale Anordnung zu bilden;
Schritt e) Wärmebehandeln der integralen Anordnung im Vakuum aufweist; und
Schritt f) das Bearbeiten der integralen Anordnung aufweist so, daß die gewünschte Gestalt der Haltenase der Leitschaufelanordnung erhalten wird.

4. Verfahren nach einem der vorangehenden Ansprüche, bei dem die Guß-Legierung eine Superlegierung auf Nickelbasis ist.

5. Verfahren nach Anspruch 4, bei dem der Ersatznasenrohling eine Schmiede-Superlegierung auf Nickelbasis aufweist.

6. Verfahren nach Anspruch 5, bei dem die Guß-Superlegierung auf Nickelbasis IN-100 und die Schmiede-Superlegierung auf Nickelbasis eine modifizierte IN-100 Legierung ist.

7. Verfahren nach einem der vorangehenden Ansprüche, bei dem die Zwischenfläche zwischen dem Rohling und der Fläche auf eine Temperatur von etwa 1040°C (1900°F) bis etwa 1150°C (2100°F) erwärmt wird und die Verbindungskraft von etwa 138 bis etwa 207 MPa (20 bis etwa 30 ksi) ist.

8. Verfahren nach Anspruch 3 und einem der Ansprüche 4 bis 7, wenn sie von Anspruch 3 abhängig sind, bei dem das Festzustandsverbinden an der Zwischenfläche erhöhten Anforderungen an mechanische Eigenschaften hinsichtlich bei erhöhter Temperatur, Zug und Spannungsrißbildung typischer und maximaler Spannungs- und Temperaturzustände im Betrieb genügt.

9. Verfahren nach einem der vorangehenden Ansprüche, bei dem die Zwischenfläche-Flächen des Rohlings und der Fläche auf eine Temperatur erwärmt werden, die im Bereich der Lösungstemperatur beider Legierungen liegt, aber die Lösungswärmebehandlungstemperatur keiner der Legierungen übersteigt, ohne ein lokales Schmelzen oder signifikantes Kornwachstum in der Leitschaufelanordnung und dem Ersatznasenrohling zu verursachen.

## Revendications

1. Procédé pour remplacer un talon de maintien d'ensemble formant aube ou analogue dans lequel ledit ensemble formant aube comprend un superalliage moulé à base de cobalt ou à base de nickel ou un alliage de titane, comprenant les étapes suivantes :
a) enlèvement du talon de maintien d'origine de façon à laisser une surface de liaison ;
b) ajout d'un talon de remplacement en alliage travaillé, muni d'une surface de liaison ;
c) placement desdites surfaces de liaison adjacentes l'une à l'autre ;
d) chauffage local desdites surfaces de liaison sous vide et application de pression à l'interface desdites surfaces de liaison de façon à joindre par forgeage ledit talon de remplacement audit ensemble formant aube pour former un ensemble en une pièce ;
e) traitement à la chaleur dudit ensemble en une pièce ; et
f) usinage dudit ensemble en une pièce à une conformation souhaitée.

2. Procédé selon la revendication 1, dans lequel :
le talon de maintien d'origine est enlevé pour laisser une partie formant souche dudit talon d'origine ;
ladite partie formant souche est usinée pour donner une face qui constitue une surface lisse à laquelle un talon de remplacement peut être lié ; et
l'ébauche de talon de remplacement est positionnée de façon adjacente à la face de ladite souche, ladite ébauche de talon de remplacement étant d'un alliage travaillé sélectionné de façon à être aisément joint par forgeage audit alliage moulé de ladite aube.

3. Procédé selon la revendication 1, dans lequel ledit ensemble formant aube est constitué par un superalliage moulé à base de nickel ou à base de cobalt et dans lequel le talon de maintien de remplacement est constitué par un superalliage travaillé, dans lequel ledit talon de maintien de remplacement est directement lié à l'état solide audit ensemble formant aube, dans lequel :
l'étape a) comprend l'enlèvement du talon d'origine de maintien d'ensemble formant aube dudit ensemble formant aube de façon à former un site de réparation incluant une surface de liaison de l'ensemble formant aube ;
l'étape b) comprend la fabrication d'une ébauche de talon de remplacement en dit superalliage travaillé de façon que ladite ébauche puisse être déformée sous des conditions de température et de pression élevées, incluant la formation d'une surface de liaison d'ébauche de talon de remplacement sur cette dernière ;
l'étape c) comprend le positionnement de ladite surface de liaison d'ébauche de talon de remplacement, de manière précise, en contact d'accouplement avec ladite surface de liaison de l'ensemble formant aube, et la disposition de ladite ébauche et dudit ensemble formant aube à l'intérieur du moyen de forgeage ;
l'étape d) comprend la mise sous vide dudit moyen de forgeage tout en chauffant localement ladite surface de liaison d'ébauche de talon de remplacement et ladite surface de liaison de l'ensemble formant aube, et en appliquant, en même temps, une pression à ladite ébauche de talon de remplacement pour obtenir une déformation de cette dernière au niveau de l'interface de ladite surface de liaison d'ébauche et de ladite surface de liaison de l'ensemble formant aube et une liaison à l'état solide au niveau de ladite interface pour former un ensemble en une pièce ;
l'étape e) comprend le traitement à la chaleur sous vide dudit ensemble en une pièce ; et
l'étape f) comprend l'usinage dudit ensemble en une pièce pour obtenir la conformation souhaitée de talon de maintien d'ensemble formant aube.

4. Procédé selon l'une quelconque des revendications précédentes, dans lequel ledit alliage moulé est un superalliage à base de nickel.

5. Procédé selon la revendication 4, dans lequel ladite ébauche de talon de remplacement est constituée par un superalliage travaillé à base de nickel.

6. Procédé selon la revendication 5, dans lequel ledit superalliage moulé à base de nickel est de l'IN-100 et ledit superalliage travaillé à base de nickel est un alliage d'IN-100 modifié.

7. Procédé selon l'une quelconque des revendications précédentes, dans lequel ladite interface entre ladite ébauche et ladite face est chauffée à une température comprise entre environ 1040 °C (1900 °F) et environ 1150 °C (2100 °F), et ladite force de liaison est comprise entre environ 138 à environ 207 MPa (20 à environ 30 ksi).

8. Procédé selon la revendication 3 et selon l'une quelconque des revendications 4 à 7 lorsque dépendantes de la revendication 3, dans lequel ladite liaison à l'état solide au niveau de ladite interface satisfait aux exigences de propriétés mécaniques de rupture à la contrainte et de traction à température élevée des conditions maximales de contrainte et de température en fonctionnement.

9. Procédé selon l'une quelconque des revendications précédentes, dans lequel les surfaces d'interface de ladite ébauche et de ladite face sont chauffées jusqu'à être comprises dans la plage de températures de dissolution des deux alliages mais ne dépassant pas la température de traitement à la chaleur de dissolution de l'un ou l'autre alliage, et sans provoquer de fusion locale ou de croissance significative de grain dans l'ensemble formant aube et dans l'ébauche de talon de remplacement.
